# EUROPEAN PATENT APPLICATION

(11) **EP 1 718 005 A1**
(43) Date of publication of application: **02.11.2006**
(21) Application number: 05720275.6
(22) Date of filing: 08.03.2005
(51) Int. Cl.: H04L 12/56

(54) **CONTROL STATION APPARATUS, BASE STATION APPARATUS, TERMINAL APPARATUS, PACKET COMMUNICATION SYSTEM, AND PACKET COMMUNICATION METHOD**

(30) Priority: 11.03.2004 JP 2004069651
(71) Applicant: Matsushita Electric Industrial Co., Ltd., Osaka 571-8501 (JP)
(72) Inventor: FUKUI, Akito c/o Matsushita El.Ind.Co.Ltd., Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2005/004003
(87) International publication number: WO 2005/088917

(57) **Abstract**

A control station apparatus where in the transmission rate of packet data is controlled, thereby suppressing abandonment of packet data, improving the usage efficiencies of wireless and wire lines, and reducing an increase of delay time caused by buffering. In the apparatus, when receiving, from a buffer part (104), a signal indicating to the effect that the amount of the packet data store in the buffer part exceeds a threshold value, or a signal indicating to the effect that the data residence time exceeds a threshold value, an EDCH FP protocol processing part (102) outputs, to an L1/L2 part (101), a flow control signal that requests a node (B) to reduce the data rate of the packet data coming from the node (B). When the amount of the packet data store in the buffer part exceeds the threshold value, or when the data residence time exceeds the threshold value, the buffer part (104) outputs, to the EDCH FP protocol processingpart (102), a signal indicating to that effect.

## Description

### Technical Field

The present invention specifically relates to a control station apparatus, base station apparatus, terminal apparatus, packet communication system and packet communication method providing high-rate packet communication service.

### Background Art

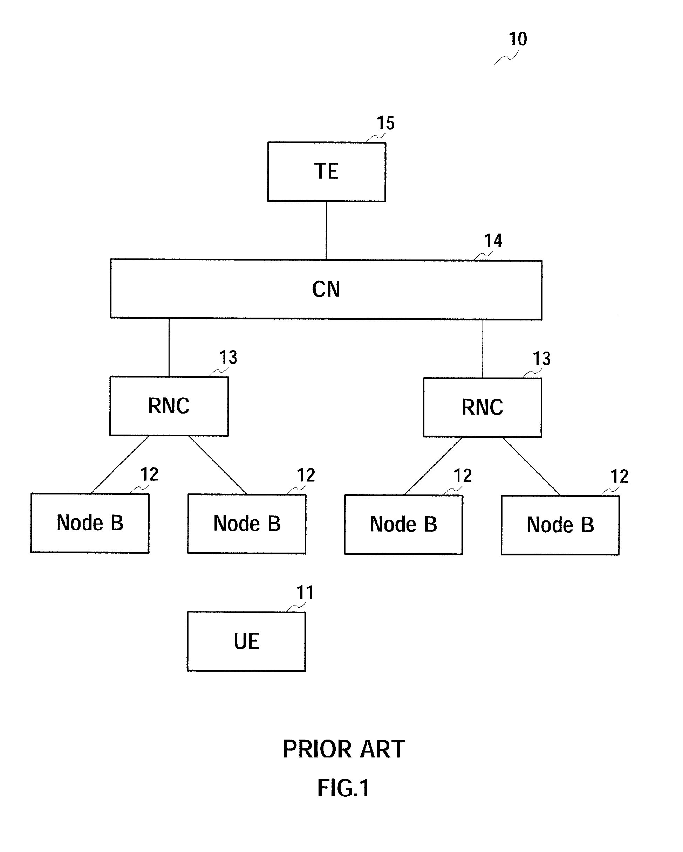

As shown in FIG.1, packet communication system 10 is comprised of mobile terminal 11 (hereinafter "UE"), base station apparatus 12 (hereinafter "Node B"), radio network control station apparatuses 13 (hereinafter "RNCs") that control a plurality of Node B's, core network 14 (hereinafter "CN") that performs location management and call connection control and so forth of UE11, and communicating party 15 (hereinafter "TE") of UE11. A number of Node B's 12 are connected to each RNC13, and a number of UE's 11 are connected to each Node B12. RNC 13 is therefore required to process data from a great number of UE's 11. For this reason, RLC (Radio Link Control) of RNC13 has a buffer for storing received data until protocol processing is performed. In best-effort type packet communication service, if RNC 13 were to have the same number of buffers as UE's 11 compatible with the maximum window size of RLC, an extremely large buffer capacity would have to be implemented. For this reason, usually, according to statistics such as the rate each UE 11 communication at maximum Uu rate and the rate a plurality of UE's 11 communicate at the same time, less buffer capacity than maximum buffer capacity is implemented and buffer is shared by a plurality of UE' s .

The operation when data is transmitted to upward direction in a conventional mobile communication system 10 will be now described using FIG.1. Data generated in an application of UE 11 is constructed into IP packet and transmitted to Node B 12. In Node B 12, baseband processing and so forth for radio transmission by WCDMA (Wideband Code Division Multiple Access) is performed, and processing such as demodulation and HARQ decoding/error correction are performed. Then, processing of layer 2(hereinafter "L2") and layer 1 (hereinafter "L1") for wired transmission is performed, and the result is transmitted to RNC 13 via wired interval interface (hereinafter "Iub/Iur"). In RNC13, transmission errors and so forth are checked, and IP packet is restored.

In addition, as a conventional mobile communication system, a downlink mobile communication system is known in which a packet control node relays packets between terrestrial network and radio network (see, for example, Patent Document 1). In this mobile communication system, according to the state of the present downlink transmission rate of the radio channel for each UE, Node B reports to the control node a request regarding the transmission rate of packets for UE, and the packet control node receiving the report transfers packets for UE to Node B at the requested transmission rate.
Patent Document 1: Japanese Patent Application Laid-Open No.2002-171572

### Disclosure of the Invention

### Problems to be Solved by the Invention

However, with a conventional system, the above-described buffer capacity is based on statistics and may not always show sufficient capacity for the number of UE's processed by RNC. For this reason, there is a problem that data is discarded due to insufficient buffer when the situation occurs where a number of UE's communicate at the same time at maximum Node B - UE (hereinafter "Uu") rate. The problem is especially significant when packet communication service with large difference between maximum Uu rate and minimum Uu rate is used. For example, when a buffer is provided in RLC of RNC, if the buffer capacity is insufficient, RLC PDU (Radio Link Control Protocol Data Unit) provided from MAC-d (Medium Access Control for Dedicated Channel) is discarded. As for discarded data, the data itself can be restored by retransmission control by RLC of RNC and UE. However, there is a problem that retransmission data is transferred on Uu interface and Iub/Iur interface and causes decreased use efficiency of radio channels and wired channels.

In addition, with a conventional system, discarded data is restored by RLC, and so upper TCP is not able to recognize data discards due to buffer congestion. For this reason, TCP of UE continues communicating without decreasing transmission rate (the amount of data transmitted per unit time), which results in a problem that congestion of the buffer is not resolved, data discards continue, and delay time caused by buffering increases.

It is therefore an object of the present invention to provide a control station apparatus, base station apparatus, terminal apparatus, packet communication system and packet communication method that are capable of controlling transmission rate of packet data, minimizing packet data discards, improving use efficiency of radio channels and wired channels and reducing increase of delay time caused by buffering.

### Means for Solving the Problem

The control station apparatus of the present invention employs a configuration having: a buffer section that temporarily stores packet data transmitted from a terminal apparatus through a base station apparatus; a protocol processing section that sequentially reads the packet data stored in the buffer section and performs predetermined protocol processing; and a flow control section that requests the base station apparatus to lower a transmission rate of the packet data transmitted from the base station apparatus based on the amount of the data stored in the buffer section.

The base station apparatus of the present invention employs a configuration having: a buffer section that temporarily stores packet data transmitted from a terminal apparatus; a protocol processing section that sequentially reads the packet data stored in the buffer section and performs predetermined protocol processing; and a first flow control section that requests the terminal apparatus to lower a transmission rate of the packet data transmitted from the terminal apparatus based on the amount of the data stored in the buffer section.

The terminal apparatus of the present invention employs a configuration having: a buffer section that temporarily stores packet data; a data discarding section that discards packet data based on the amount of the packet data stored in the buffer section so that new packet data is not stored in the buffer section; a protocol processing section that sequentially reads the packet data stored in the buffer section and performs predetermined protocol processing; a flow control section that, when the packet data is discarded at the data discarding section, sets the transmission rate lower than when the packet data is not discarded; and a transmission section that transmits the packet data stored in the buffer section to a base station apparatus at the transmission rate set at the flow control section.

The packet communication system of the present invention employs a configuration having: a terminal apparatus that sequentially reads from a first buffer packet data temporarily stored in the first buffer, performs predetermined protocol processing and transmits the packet data; a base station apparatus that temporarily stores the packet data transmitted from the terminal apparatus in a second buffer, sequentially reads from the second buffer the packet data stored in the second buffer, performs predetermined protocol processing and outputs the packet data; and a control station apparatus that temporarily stores the packet data transmitted from the base station apparatus in a third buffer, sequentially reads from the third buffer the packet data stored in the third buffer and performs predetermined protocol processing, and, in this packet communication system, the control station apparatus requests the base station apparatus to lower a transmission rate of packet data transmitted from the base station apparatus to the control station apparatus based on the amount of the packet data stored in the third buffer.

The packet communication method of the present invention includes: at a terminal apparatus, sequentially reading from a first buffer packet data temporarily stored in the first buffer, performing predetermined protocol processing and transmitting the packet data to a base station apparatus; at the base station apparatus, receiving the packet data transmitted from the terminal apparatus, temporarily storing the packet data in a second buffer, sequentially reading from the second buffer the packet data stored in the second buffer, performing predetermined protocol processing and transmitting the packet data to a control station apparatus; and at the control station apparatus, temporarily storing the packet data transmitted from the base station apparatus in a third buffer, sequentially reading from the third buffer the packet data store in the third buffer and performing predetermined protocol processing, and, in this packet communication method, the control station apparatus requests the base station apparatus to lower a transmission rate of packet data transmitted from the base station apparatus to the control station apparatus based on the amount of the packet data stored in the third buffer.

### Advantageous Effect of the Invention

According to the present invention, by controlling transmission rate of packet data, it is possible to minimize packet data discards, improve use efficiency of radio channels and wired channels and reduce increase of delay time caused by buffering.

### Brief Description of the Drawings

FIG. 1 is a diagram showing a configuration of amobile communication system;
FIG.2 is a block diagram showing a configuration of a radio network control station apparatus according to an embodiment of the present invention;
FIG.3 is a block diagram showing a configuration of a base station apparatus according to an embodiment of the present invention;
FIG.4 is a block diagram showing a configuration of a mobile terminal according to an embodiment of the present invention;
FIG.5 is a block diagram showing a configuration of a core network according to an embodiment of the present invention;
FIG.6 is a block diagram showing a configuration of a communicating party of a mobile terminal according to an embodiment of the present invention;
FIG.7 is a diagram showing a protocol configuration according to an embodiment of the present invention;
FIG.8 is a diagram showing scheduling information according to an embodiment of the present invention; and
FIG.9 is a diagram showing scheduling information according to an embodiment of the present invention.

### Best Mode for Carrying Out the Invention

An embodiment of the present invention will be described below in detail with reference to the accompanying drawings.

### (Embodiment)

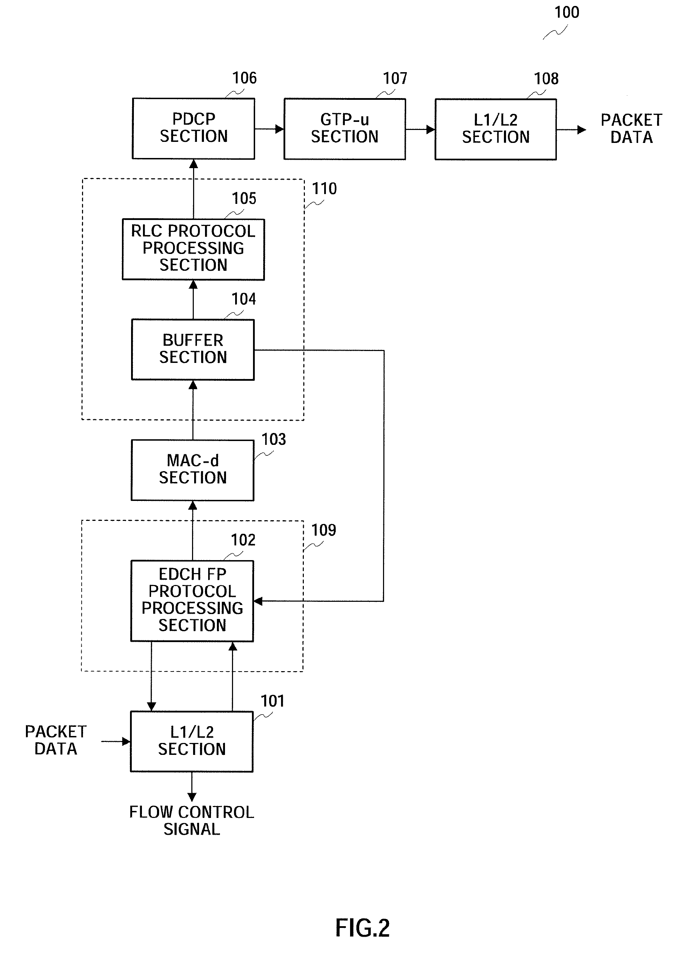

FIG.2 is a block diagram showing a configuration of RNC 100 according to an embodiment of the present invention. Enhanced dedicated channel (hereinafter "EDCH") FP protocol processing section 102 forms EDCH FP (Frame Protocol for Enhanced Dedicated Channel) section 109. In addition, buffer section 104 and RLC protocol processing section 105 form RLC section 110.

Layer 1/layer 2 (hereinafter "L1/L2") section 101 performs processing of layer 2 (hereinafter "L2") and processing of layer 1 (hereinafter "L1") for wired transmission on packet data inputted from Node B (described later), restores EDCH FP PDU (Frame Protocol for Enhanced Dedicated Channel Protocol Data Unit) and outputs the result to EDCH FP protocol processing section 102. In addition, L1/L2 section 101 outputs to Node B a flow control signal, which is a signal requesting to lower transmission rate of packet data transmitted from Node B to RNC and which is inputted from EDCH FP protocol processing section 102.

EDCH FP protocol processing section 102 is a flow control section, and checks transmission errors in packet data inputted from L1/L2 section 101 and so forth and outputs the result to MAC-d section 103. In addition, EDCH FP protocol processing section 102, when a signal is inputted from buffer section 104 indicating that the amount of data stored in the buffer is equal to or greater than a threshold value, or when a signal is inputted indicating that the data retention time is equal to or greater than a threshold value, outputs a flow control signal to L1/L2 section 101. Here, the data retention time is determined by averaging the values determined by multiplying the amount of packet data stored in the buffer and the rate of reading packet data from the buffer.

MAC-d section 103 performs MAC processing for dedicated channel on the packet data inputted from EDCH FP protocol processing section 102, removes MAC-d header, restores RLC PDU, and outputs the result to buffer section 104.

Buffer section 104 temporarily stores the packet data inputted from MAC-d section 103 and outputs the packet data to RLC protocol processing section 105 at a predetermined timing. In addition, when the mount of stored packet data is equal to or greater than a threshold value, buffer section 104 outputs a signal indicating that the amount of data is equal to or greater than a threshold value, to EDCH FP protocol processing section 102. Further, when the data retention time is equal to or greater than a threshold value, buffer section 104 outputs a signal indicating that the data retention time is equal to or greater than a threshold value, to EDCH FP protocol processing section 102. Buffer section 104 may be designed to compare only one of the amount of stored data and the data retention time, with a threshold value.

RLC protocol processing section 105 checks the sequence number of RLC header with RLC PDU inputted from buffer section 104, and, when the sequence number is normal, removes RLC header and outputs the result to PDCP (Packet Data Convergence Protocol) section 106. In addition, RLC protocol processing section 105, when detecting abnormality with the sequence number, such as absence of the sequence number of RLC header, returns RLC PDU, which is set with a retransmission request, to RLC of UE.

PDCP section 106 extends an IP header with compressed packet data inputted from RLC protocol processing section 105, restores an IP packet and outputs the IP packet to GTP-u (GTRS Tunneling Protocol for user plane) section 107.

GTP-u section 107 adds a GTP-u header for data transfer between RNC and CN to the IP packet inputted from PDCP section 106, constructs GTP-u PDU (GPRS Tunneling Protocol for user plane Protocol Data Unit) and outputs the result to L1/L2 section 108.

L1/L2 section 108 performs processing of L2 and processing of L1 for wired transmission on the packet data inputted from GTP-u section 107 and outputs the result to CN via Iu interface.

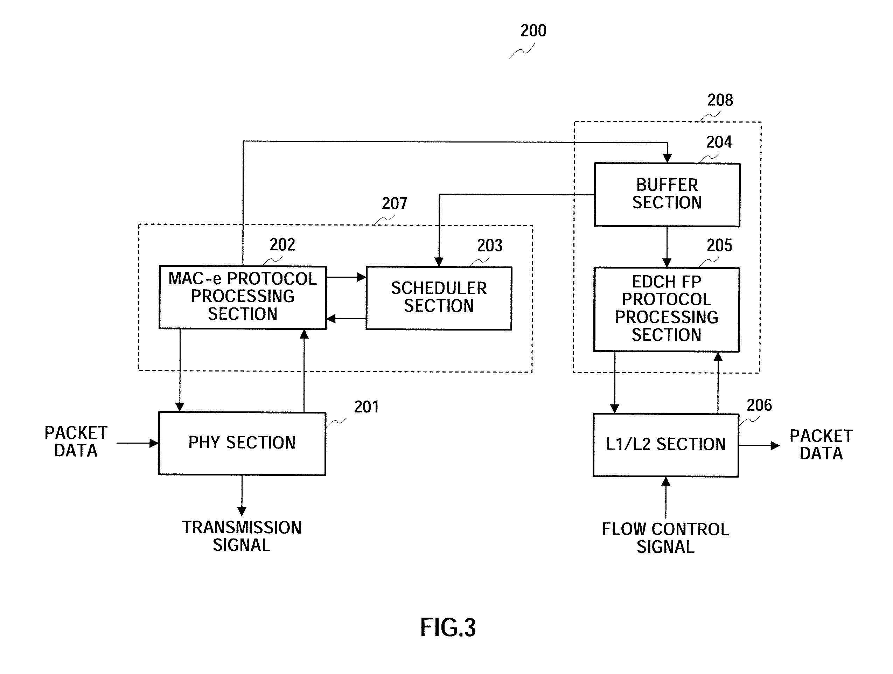

The configuration of Node B 200 will now be described referring to FIG.3. FIG.3 is a block diagram showing the configuration of Node B 200. MAC-e (Medium Access Control of Enhanced Dedicated Channel) protocol processing section 202 and scheduler section 203 form MAC-e section 207. In addition, buffer section 204 and EDCH FP protocol processing section 205 form EDCH FP section 208.

PHY section 201 performs baseband processing and so forth for radio transmission by WCDMA on a transmission signal inputted from MAC-e protocol processing section 202, and transmits the result to UE (described later). The transmission signal includes information for report to each UE and flow control signal. In addition, PHY section 201 performs L1 processing for wired transmission on received packet data, and outputs the result to MAC-e protocol processing section 202.

MAC-e protocol processing section 202 demodulates the packet data inputted from PHY section 201, performs HARQ decoding, error correction, etc., and constructs MAC-d PDU (Medium Access Control for Dedicated Channel Protocol Data Unit). In addition, MAC-e protocol processing section 202 generates, from the received packet data, channel quality information (for example, CQI (Channel Quality Indicator), which is information indicating channel quality of the radio channel at each UE. Then, MAC-e protocol processing section 202 determines, for each UE, the transmission timing and modulation scheme used for transmission, based on the generated channel quality information of radio channels for a plurality of UE' s, and outputs the packet data to PHY section 201, so as to report information about the determined transmission timing, modulation scheme and so forth to UE.

Scheduler section 203 is a first flow control section, and performs scheduling using the channel quality information inputted from MAC-e protocol processing section 202 and use state of buffer section 204 of EDCH FP section 208 as information for scheduling. In other words, scheduler section 203 performs scheduling so that transmission rate is higher when channel quality is better. In addition, when the amount of stored data is equal to or greater than a threshold value from information about the amount of stored packet data inputted from buffer section 204 or when the data retention time is equal to or greater than a threshold value from information about the data retention time of packet data inputted from buffer section 204, scheduler section 203 performs scheduling for lowering transmission rate so as to lower transmission rate of packet data transmitted from UE to Node B. Then, scheduler section 203 outputs scheduling information, which is information about the result of scheduling including information about setup transmission rate, to MAC-e protocol processing section 202. The scheduling method will be described later.

Buffer section 204 temporarily stores the packet data inputted from MAC-e protocol processing section 202 and outputs the stored packet data to EDCH FP protocol processing section 205 at a predetermined timing. In addition, buffer section 204 outputs information about the amount of stored packet data or information about the data retention time of packet data, to scheduler section 203. Buffer section 204 may be designed to compare only one of the amount of stored data and the data retention time, with a threshold value.

EDCH FP protocol processing section 205 is a second flow control section, and adds EDCH FP for checking transmission errors and so forth in data transmission between Node B and RNC, to MAC-d PDU inputted from buffer section 204, constructs EDCH FP PDU, and outputs the result to L1/L2 section 206. In addition, EDCH FP protocol processing section 205, when a flow control signal is inputted from L1/L2 section 206, lowers transmission rate of packet data outputted to L1/L2 section 206.

L1/L2 section 206 performs processing of L2 and processing of L1 for wired transmission on packet data inputted from EDCH FP protocol processing section 205 and transmits the result to RNC via Iub/Iur interface. In addition, L1/L2 section 206, when a flow control signal is received from RNC 100, outputs the signal to EDCH FP protocol processing section 205.

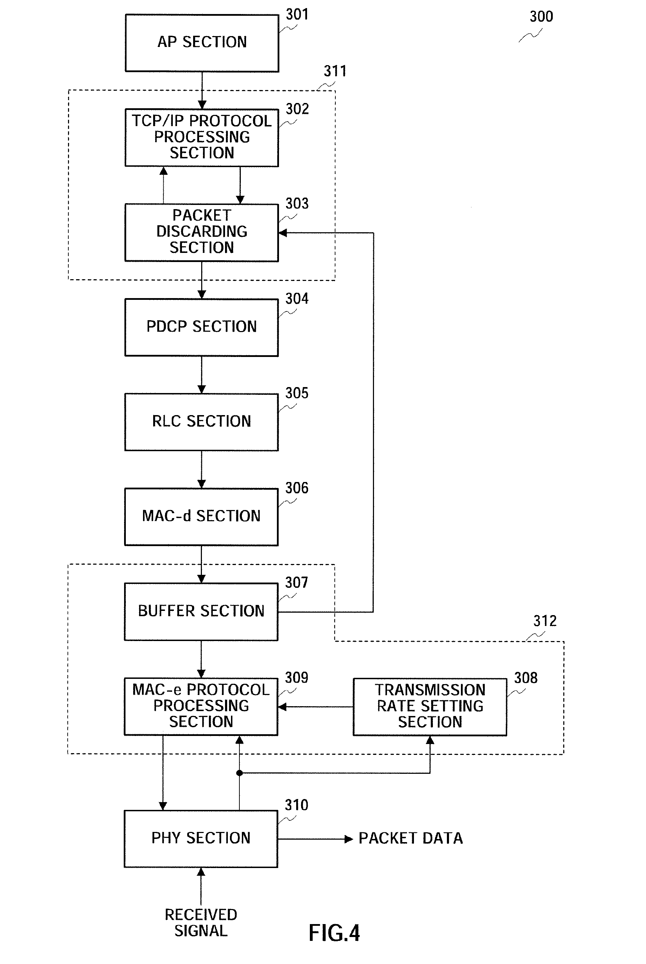

Next, the configuration of UE 300 will be described using FIG.4. FIG.4 is block diagram showing the configuration of UE 300. TCP/IP protocol processing section 302 and packet discarding section 303 form TCP/IP section 311. Buffer section 307, transmission rate setting section 308 and MAC-e protocol processing section 309 form MAC-e section 312.

AP section 301 generates data and outputs the result to TCP/IP protocol processing section 302. Here, TCP is a protocol having functions for flow control, retransmission control and so forth, controlling data transmission amount.

TCP/IP protocol processing section 302 is a flow control section, and adds TCP header and so forth for retransmission control of TCP, to data inputted from AP section 301, constructs the data into IP packet and outputs the result to packet discarding section 303. In addition, when information is inputted indicating that packet data is discarded from packet discarding section 303, TCP/IP protocol processing section 302 sets lower transmission rate than when packet data is not discarded.

When, frombuffer section 307, a signal indicating that the amount of packet data stored in buffer section 307 is equal to or greater than a threshold value is inputted or a signal indicating that the data retention time of packet data is equal to or greater than a threshold value is inputted, packet discarding section 303 discards IP packet inputted from TCP/IP protocol processing section 302. In addition, when, from buffer section 307, a signal indicating that the amount of packet data stored in buffer section 307 is equal to or greater than a threshold value is not inputted or a signal indicating that data retention time of packet data is equal to or greater than a threshold value is not inputted, packet discarding section 303 outputs IP packet inputted from TCP/IP protocol processing section 302, to PDCP section 304. In other words, packet discarding section 303 monitors the use state of buffer section 307, discards IP packet when buffer section 307 is in congested state, and lowers transmission rate of TCP, thereby promptly resolving the congested state.

PDCP section 304 compresses an IP header of the IP packet inputted from packet discarding section 303 and outputs the result to RLC section 305.

RLC section 305 adds an RLC header including an sequence number and so forth for retransmission control, to the packet data inputted from PDCP section 304, constructs RLC PDU and outputs the result to MAC-d section 306.

MAC-d section 306 adds MAC-d header and so forth necessary for MAC processing of dedicated channel, to RLC PDU inputted from RLC section 305, and outputs the result to buffer section 307.

Buffer section 307 temporarily stores the packet data inputted from MAC-d section 306 and outputs the packet data to MAC-e protocol processing section 309 at a predetermined timing. In addition, buffer section 307 outputs information about the amount of packet data to be stored or information about the data retention time of the packet data, to scheduler section 303. Buffer section 204 may be designed to output only one of the amount of stored data and the data retention time, to packet discarding section 303.

Transmission rate setting section 308 sets the transmission rate reported from a base station apparatus in scheduling information included in a received signal inputted from PHY section 310, and outputs to MAC-e protocol processing section 309 transmission rate information, which is information about the transmission rate set.

MAC-e protocol processing section 309 performs processing such as HARQ coding, adaptive modulation, etc., on packet data inputted from buffer section 307 based on scheduling information included in a received signal inputted from PHY section 310, and constructs MAC-e PDU. Then, MAC-e protocol processing section 309 outputs MAC-e PDU to PHY section 310, at the transmission rate of transmission rate information inputted from transmission rate determination section 308, and at the transmission timing reported in scheduling information.

PHY section 310 performs baseband processing and so forth for radio transmission by WCDMA, on the packet data inputted from MAC-e protocol processing section 309, and transmits the packet data to Node B 200 via Uu interface. In addition, PHY section 310 down-converts a received signal from radio frequency into baseband frequency and outputs the signal to transmission rate setting section 308 and MAC-e protocol processing section 309.

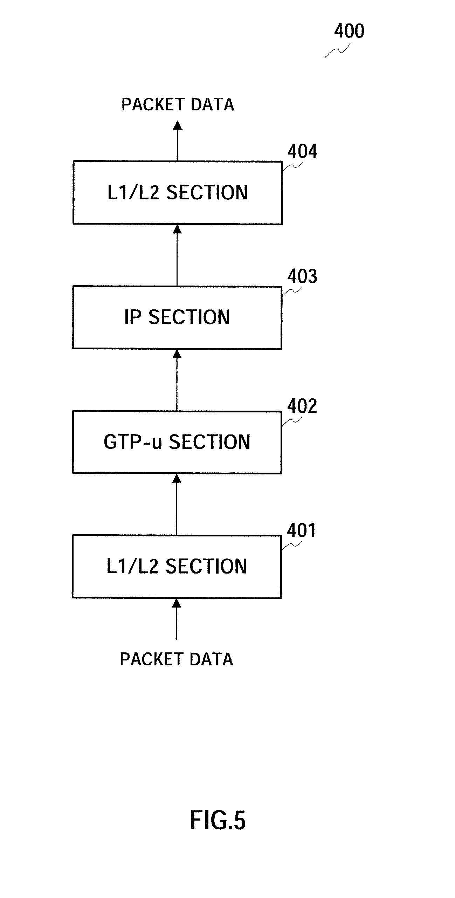

Next, the configuration of CN 400 will be described using FIG.5. FIG.5 is a block diagram showing the configuration of CN 400.

L1/L2 section 401 performs processing of L2 processing and processing of L1 for wired transmission on the packet data transmitted and inputted from RNC, and restores GTP-u PDU. Then, L1 / L2 section 401 outputs the restored GTP-u PDU to GTP-u section 402.

GTP-u section 402 removes GTP-u header from GTP-u PDU inputted from L1/L2 section 401 and restores IP packet. Then, GTP-u section 402 outputs the restored IP packet to IP section 403.

IP section 403 performs IP routing processing and so forth on the IP packet inputted from GTP-u section 402 and outputs the result to L1/L2 section 404.

L1/L2 section 404 performs processing of L2 and processing of L1 for wired transmission on the packet data inputted from IP section 403, and outputs the result to TE via Gi interface.

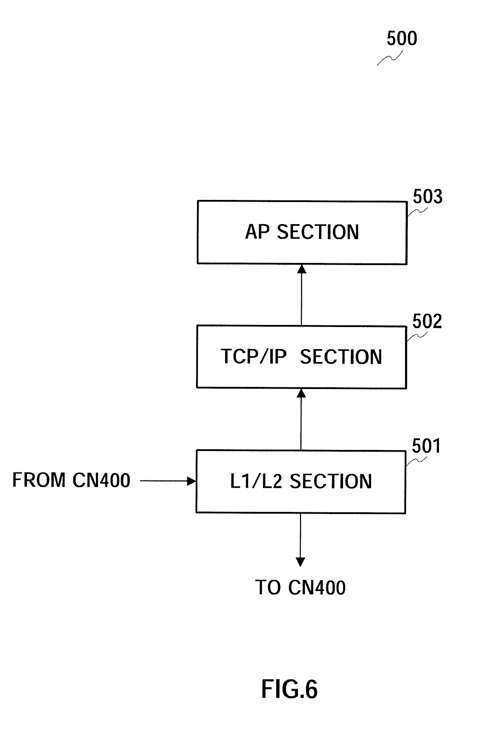

Next, the configuration of TE 500 will be described using FIG.6. FIG.6 is a block diagram showing the configuration of TE 500.

L1/L2 section 501 performs processing of L2 and processing of L1 for wired transmission on the packet data transmitted and inputted from CN 400, and restores IP packet. Then, L1/L2 section 501 outputs the restored IP packet to TCP/IP section 502.

TCP/IP section 502 removes IP header and so forth from the IP packet inputted from L1/L2 section 502 and analyzes the sequence number of TCP header and so forth. When the analysis result of the sequence number of TCP header is normal, TCP/IP section 502 removes the TCP header from the packet data and outputs the result to AP section 503. In addition, TCP/IP section 502, when detecting abnormality with the sequence number of the TCP header such as absence of the sequence number of the TCP header in the analysis of the sequence number of TCP header, constructs ACK TCP packet, which is set with the latest correctly received sequence number, and outputs the result to TCP/IP section 311 of UE 300. In addition, with TCP/IP section 311 of UE 300, TCP/IP section 502 performs flow control, retransmission control, etc., and controls the data transmission amount.

AP section 503 acquires desired data from the packet data inputted from TCP/IP section 502.

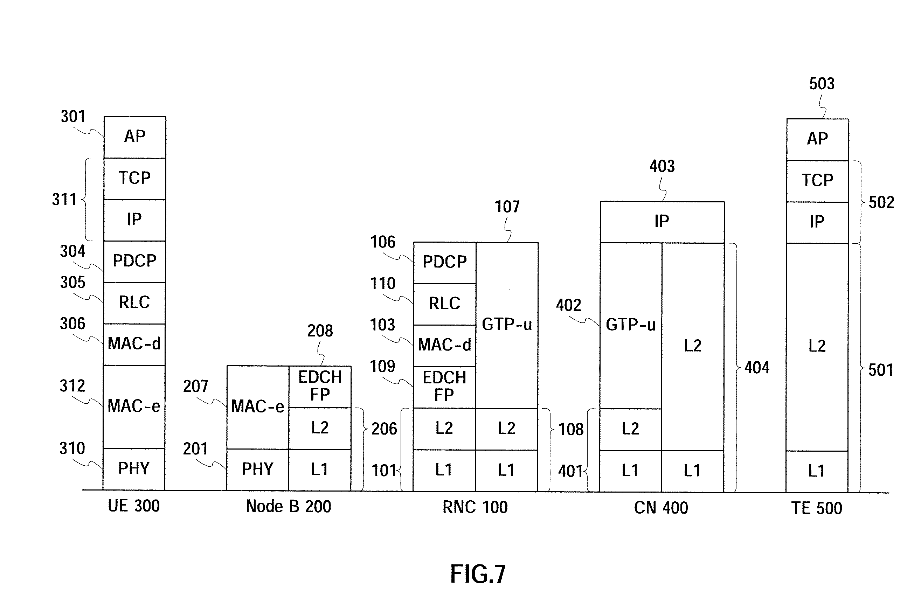

FIG.7 shows a protocol configuration example for uplink direction (where data is transmitted from UE to TE) on user plane where EDCH technology is applied.

At present, in 3GPP (3rd Generation Partnership Project), studies are conducted regarding EDCH technology that realizes high-rate uplink packet communication. EDCH is a new technology, standardization of which is in progress by 3GPP, and realizes high-rate uplink radio channel in the direction from UE to Node B by applying adaptive modulation scheme, hybrid ARQ (HARQ) scheme and methods such as high-rate selection of communication users and adaptively changing transmission parameters according to radio channel state to radio interface.

In addition, EDCH is a scheme whereby a number of UE's share one radio channel and perform data transfer, and therefore is a best-effort communication type. More specifically, UE reports channel state of radio channel to Node B, and Node B considers the channel state of radio channel to UE, schedules the transmission order of data to a number of UE's and instructs data transmission to UE's.

The protocol configuration when EDCH technology is applied is currently studied by 3GPP, and FIG.7 shows an example. EDCH newly uses MAC-e and EDCH FP protocol. MAC-e is adopted to UE and Node B. In addition, MAC-d that performs conventional MAC processing for dedicated channel, RLC protocol that is a selective retransmission type retransmission control protocol, and PDCP, which is a protocol performing IP packet header compression and so forth, are adopted above MAC-e.

In addition, EDCH FP is adopted for data transfer between MAC-e of Node B and MAC-d of radio network control stationapparatus. Further, TCP/IP is adopted above PDCP. GTP-u is adopted for RNC and CN, for frame transfer between RNC and CN.

Next, the operation of the packet communication system using RNC 100, Node B 200, UE 300 and TE500 will be described using FIG.2 to FIG.9. In FIG.7, protocols that perform the same protocol processing as protocol processing performed by the configurations shown in FIG.2 to FIG. 6 are assigned the same reference numerals as with the configurations shown in FIG.2 to FIG.6.

Data generated in AP section 301 of UE 300 is added TCP header including a sequence number for retransmission control for TCP, and then, in IP, constructed into IP packet. The IP packet is subjected to IP header compression and so forth in PDCP 304, and, in RLC 305, is added RLC header including a sequence number for retransmission control and constructed into RLC PDU. In MAC-d 306, RLC PDU is added MAC-d header and so forth necessary for MAC processing for dedicated channel, and thereafter, in MAC-e 312, is subjected to processing of HARQ coding, adaptive modulation, etc., according to the modulation scheme and coding rate reported from MAC-e 207 of Node B 200 as scheduling information and constructed to MAC-e PDU, and passed to PHY 310 at a transmission timing and transmission rate in accordance with the transmission timing specification and transmission rate specification reported from MAC-e 207 of Node B 200 as scheduling information. MAC-e PDU is subjected to baseband processing for radio transmission by WCDMA in PHY 310 and transmitted to Node B 200 via radio channel (Uu interface).

At this time, the transmission rate reported from Node B 200 to UE 300 as scheduling information is an adequate value that prevents overflow of packet data stored in buffer section 204 of EDCH FP 208 of Node B 200. In addition, in MAC-e 312, when the amount of packet data stored in buffer section 307 is equal to or greater than a threshold value, or, when the data retention time is equal to or greater than a threshold value, packet data is discarded in TCP/IP 311.

At Node B 200, in PHY 201, baseband processing for radio transmission by WCDMA is performed, and, in MAC-e 207, processing such as demodulation, HARQ decoding/error correction, etc., is performed and MAC-d PDU is constructed. In addition, for each UE 300, MAC-e 207 determines the transmission timing, transmission rate used upon transmission, and so forth, from the channel state of radio channels to a number of UE's 300 and information as to whether or not the amount of packet data stored in buffer section 204 of EDCH FP 208 is equal to or greater than a threshold value or information as to whether or not the data retention time is equal to or greater than a threshold value, and reports the result to MAC-e 312 of UE 300. In EDCH FP 208, MAC-d PDU is added EDCH FP header for checking transmission errors in data transfer between Node B 200 and RNC 100 and constructed into EDCH FP PDU. After that, in L2/L1 260, processing of L2 and processing of L1 processing for wired transmission are performed, and the result is transmitted to RNC 100 via Iub/Iur interface.

In addition, when flow control is performed such that the transmission rate of packet data from EDCH FP 109 of RNC 100 is lowered, EDCH FP 208 lowers the transmission rate of packet data transmitted to RNC 100.

In L1/L2 101 of RNC 100, processing of L2 and processing of L1 for wired transmission are performed, and EDCH FP PDU is restored. In EDCH FP 109, EDCH FP PDU is subjected to transmission error check and so forth and is restored to MAC-d PDU. In MAC-d 103, MAC-d PDU is subjected to MAC processing for dedicated channel, has MAC-d header removed and is restored to RLC PDU. In RLC 110, RLC PDU has the sequence number of RLC header checked, and, when the sequence number is normal, has RLC header removed, and, in PDCP 106, has compressed IP header extended and is restored to IP packet.

In RLC 110, when abnormality is detected with the sequence number of RLC header, such as absence of the sequence number of RLC header, RLC PDU that is set with a retransmission request, is returned to RLC 305 of UE 300. Upon receiving RLC PDU set with a retransmission request, RLC 305 of UE 300 immediately retransmits that RLC PDU to RLC 110 of RNC 100. By this means, it is possible to restore RLC PDU discarded at Uu and Iub/Iur.

In addition, when the amount of packet data stored in buffer section 104 of RLC 110 is equal to or greater than a threshold value, RLC 110 outputs to EDCH FP 109 a signal indicating that the amount of packet data stored in buffer section 104 is equal to or greater than a threshold value and EDCH FP 109 transmits a flow control signal to EDCH FP 208 of Node B 200, thereby controlling the transmission rate of packet data low. In addition, when the data retention time of packet data stored in buffer section 104 of RLC 110 is equal to or greater than a threshold value, RLC 110 outputs to EDCH FP 109 a signal indicating that the data retention time of packet data stored in buffer section 104 of RLC 110 is equal to or greater than a threshold value and EDCH FP 109 transmits a flow control signal to EDCH FP 208 of Node B 200, thereby controlling the transmission rate of packet data low.

In GTP-u 107, IP packet is added GTP-u header for data transfer between RNC 100 and CN 400, and is constructed into GTP-u PDU. After that, in L2/L1 404, IP packet is subjected to processing of L2 and processing of L1 for wired transmission and is transmitted to CN 400 via Iu interface.

At CN 400, in L1/L2 401, processing of L2 and processing of L1 for wired transmission are performed, and the result is restored to GTP-u PDU. In GTP-u 402, GTP-u PDU has GTP-u header removed and is restored to IP packet. In IP 403, IP packet is subjected to IP routing processing and so forth, and, in L2/L1 404, is subjected to processing of L2 and processing of L1 for wired transmission and is transmitted to TE 500 via Gi interface.

At TE 500, in L1/L2 501, processing of L2 and processing of L1 for wired transmission are performed, and the result is reconstructed to IP packet. In TCP/IP 502, IP packet has IP header removed, and the sequence number of TCP header is analyzed, and, when the analysis result is normal, TCP header is removed and data is passed to AP 503.

In TCP/IP 502, when abnormality with the sequence number of TCP header is detected (such as absence of the sequence number of TCP header), ACK TCP packet, which is set with the latest correctly received sequence number, is constructed and returned to TCP/IP 311 of UE 300. TCP/IP 311 of UE 300, when receiving ACK TCP packet set with the same sequence number three consecutive times, determines that IP packet is discarded in network, retransmits TCP packet having the next sequence number of the sequence number set in ACK TCP packet, and, at the same time, determines that the network is congested, operates fast retransmission function and lowers transmission rate of TCP/IP 311.

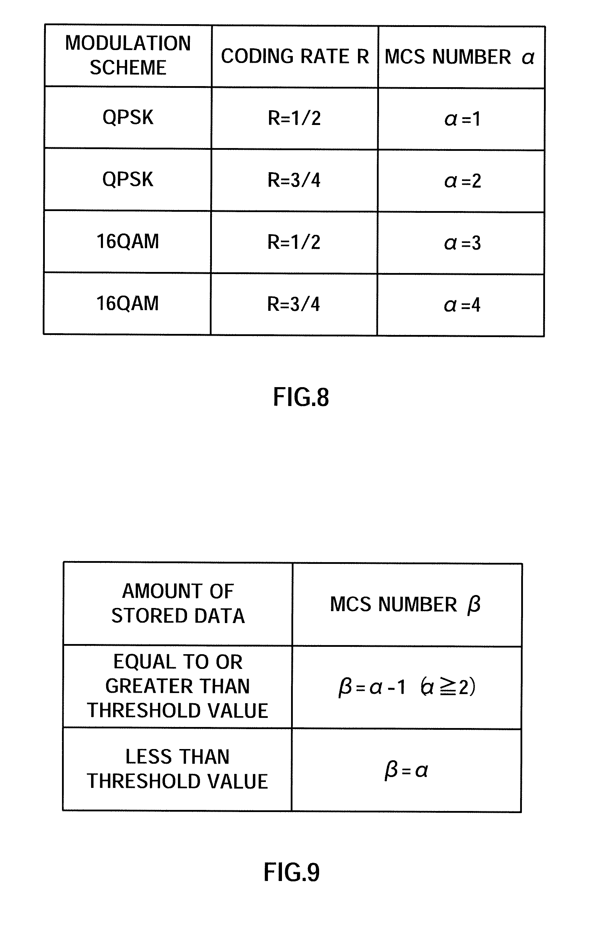

Next, scheduling method in Node B 200 will be described with reference to FIG.8 and FIG.9, taking an example of a case where scheduling is performed based on the amount of data stored in buffer section 204. FIG. 8 is a diagram showing a table storing scheduling information 1 associating modulation schemes and coding rates with MCS numbers as transmission rates, and FIG.9 is diagram showing a table storing scheduling information 2 associating amounts of data of packet data stored in buffer section 204 with MCS numbers. Here, transmission rates become higher in the order of MCS numbers MCS = 1, MCS = 2, MCS = 3, and MCS = 4. Therefore, if the coding rate does not change, transmission rate becomes higher as M-ary number is greater, and, if the modulation scheme does not change, transmission rate becomes higher as the coding rate becomes greater.

For example, in scheduler section 203 of MAC-e section 207, Node B 200 stores a table such as shown in FIG.8 and FIG.9 and performs scheduling using channel quality information for each UE 300 and information about the amount of packet data stored in buffer section 204, referring to scheduling information 1 and 2 shown in FIG.8 and FIG.9. In other words, when scheduler section 203 selects MCS number α = 3 from channel quality for UE 300, if the amount of packet data stored in buffer section 204 is equal to or greater than a threshold value, then β = α-1 = 3-1 = 2 from FIG.9, and consequently scheduler section 203 transmits MCS number = 2 to UE 300 as scheduling information. On the other hand, when scheduler section 203 selects MCS number α = 3 from channel quality for UE 300, if the amount of packet data stored in buffer section 204 is less than a threshold value, then β = α = 3 from FIG.9, and consequently scheduler section 203 transmits MCS number= 3 to UE 300 as scheduling information. When scheduler 203 selects "2," "3" and "4" as MCS number = α, the result is the same as above. When scheduler 203 selects "1" as MCS number α, MCS number = "1" is transmitted to UE 300 as scheduling information. Scheduling information 1 and 2 are not limited to the case of FIG.8 and FIG.9, and arbitrary scheduling information can be used. In addition, the case of FIG.8 and FIG. 9 of storing tables for scheduling information 1 and 2 is by no means limiting, and it is equally possible to use MCS obtained from an equation using channel quality information and information about the amount of packet data stored in buffer section 204 as scheduling information. Information other than MCS numbers may be used for scheduling information. In addition, when scheduling is performed based on the data retention time of data stored in buffer section 204, it is possible to make the same equation for determining β as in FIG.9 for when the data retention time is equal to or greater than a threshold value and when the data retention time is less than a threshold value.

As described above, according to the present embodiment, by controlling transmission rate of packet data, it is possible to minimize data discards due to overflow from the buffer and improve use efficiency of radio channels and wired channels, and thereby reduce increase of delay time due to buffering. In addition, according to the present embodiment, when the amount of packet data stored in the buffer, including retransmitted packet data, is equal to or greater than a threshold value, or when the data retention time is equal to or greater than a threshold value, request is made to lower the transmission rate of incoming packet data, so that it is possible to prevent the buffer from being congested with retransmitted packet data and prevent packet data from being discarded. In addition, according to the present embodiment, by performing scheduling considering the amount of data stored in the buffer or the data retention time in a base station apparatus, new signal for specifying transmission rate to a terminal apparatus is not necessary, so that it is possible to further improve useefficiencyofradiochannels. In addition, according to the present embodiment, the amount of data stored in the buffer is equal to or greater than a threshold value or when the data retention time is equal to or greater than a threshold value in all of the control station apparatus, the base station apparatus and the terminal apparatus, the amount of data stored in the buffer is minimized, so that, by minimizing the amount of data stored in the buffer in any one or two of the control station apparatus, the base station apparatus and the terminal apparatus, it is possible to prevent overflow of the amount of data stored in the buffer of lower stations and prevent packet data from being discarded. In addition, according to the present embodiment, by discarding packet data so that new packet data is not stored in buffer section 307 based on the amount of packet data stored in buffer section 307 of the terminal apparatus, it is possible to lower overall transmission rate in, for example, TCP, which performs transmission control, so that packet data discards at the base station apparatus and the control station apparatus can be minimized.

Although with the above-described embodiment, buffer section 104 is provided in RLC section 110 of RNC 100, this is by no means limiting, and it is equally possible to provide buffer section 104 in arbitrary position other than RLC section 110, such as MAC-d section 103 or EDCH FP section 109.

In addition, for flow control of the above-described embodiment, the flow control method disclosed in "3GPP TS 25.425 V5.6.0 (2003-12) UTRAN Iur interface user plane protocols for Common Transport Channel data streams" is applicable. However, in this case, instead of controlling data received from RNC at Node B, it is necessary to change the direction so that RNC controls data received from Node B.

In addition, although with the above-described embodiment, buffer section 204 is provided in EDCH FP section 208 of Node B 200, this is by no means limiting, and it is equally possible to provide buffer section 204 in MAC-e section 207.

In addition, although with the above-described embodiment, buffer section 307 is provided in MAC-e section 312 of UE 300, this is by no means limiting, and it is equally possible to provide buffer section 307 in PDCP section 304, RLC section 305, MAC-d section 306 or TCP/IP section 311.

The present application is based on Japanese Patent Application No.2004-69651,filed on March 11,2004, the entire content of which is expressly incorporated by reference herein.

### Industrial Applicability

The control station apparatus, base station apparatus, terminal apparatus, packet communication system and packet communication method of the present invention control transmission rate of packet data, thereby minimizing packet data discards and improving use efficiency of radio channels and wired channels and providing an advantage of reducing increase of delay time due to buffering, and therefore are useful for controlling transmission rate of packet data.

## Claims

1. A control station apparatus comprising:
a buffer section that temporarily stores packet data transmitted from a terminal apparatus through a base station apparatus;
a protocol processing section that sequentially reads the packet data stored in the buffer section and performs predetermined protocol processing; and
a flow control section that requests the base station apparatus to lower a transmission rate of the packet data transmitted from the base station apparatus based on the amount of the data stored in the buffer section.

2. The control station apparatus according to claim 1, wherein, when the amount of the data stored in the buffer section is equal to or greater than a threshold value, the flow control section requests the base station apparatus to lower the transmission rate of the packet data.

3. The control station apparatus according to claim 1, wherein, when a data retention time determined by multiplying the amount of the data stored in the buffer section with a rate of reading from the buffer section the data stored in the buffer section is equal to or greater than a threshold value, the flow control section requests the base station apparatus to lower the transmission rate of the packet data.

4. A base station apparatus comprising:
a buffer section that temporarily stores packet data transmitted from a terminal apparatus;
a protocol processing section that sequentially reads the packet data stored in the buffer section and performs predetermined protocol processing; and
a first flow control section that requests the terminal apparatus to lower a transmission rate of the packet data transmitted from the terminal apparatus based on the amount of the data stored in the buffer section.

5. The base station apparatus according to claim 4, further comprising a second flow control section that transmits the packet data subjected to the protocol processing in the protocol processing section to a control station apparatus at a standard transmission rate that is set in advance, and that, when requested from the control station apparatus to lower the transmission rate, transmits the packet data subjected to the protocol processing in the protocol processing section to the control station apparatus at a lower transmission rate than the standard transmission rate.

6. The base station apparatus according to claim 4, wherein the first flow control section requests the terminal apparatus to lower the transmission rate of the packet data transmitted from the terminal apparatus by reporting to the terminal apparatus a result of scheduling based on channel quality for the terminal apparatus and information about the amount of the packet data stored in the buffer section.

7. The base station apparatus according to claim 6, wherein the first flow control section sets the transmission rate higher when the channel quality is better, sets the transmission rate lower when the amount of the data stored in the buffer section is equal to or greater than the threshold value, than when the amount of the data is less than the threshold value, and reports to the terminal apparatus information about the set transmission rate as the result of scheduling.

8. The base station apparatus according to claim 6, wherein the first flow control section sets the transmission rate higher when the channel quality is better, sets the transmission rate lower when the data retention time determined by multiplying the amount of the data stored in the buffer section with a rate of reading from the buffer section the data stored in the buffer section is equal to or greater than a threshold value, than when the data retention time is less than the threshold value, and reports to the terminal apparatus information about the set transmission rate as the result of scheduling.

9. A terminal apparatus comprising:
a buffer section that temporarily stores packet data;
a data discarding section that discards packet data based on the amount of the packet data stored in the buffer section so that new packet data is not stored in the buffer section;
a protocol processing section that sequentially reads the packet data stored in the buffer section and performs predetermined protocol processing;
a flow control section that, when the packet data is discarded at the data discarding section, sets the transmission rate lower than when the packet data is not discarded; and
a transmission section that transmits the packet data stored in the buffer section to a base station apparatus at the transmission rate set at the flow control section.

10. The terminal apparatus according to claim 9, wherein the data discarding section discards the packet data when the amount of the data stored in the buffer section is equal to or greater than a threshold value.

11. The terminal apparatus according to claim 9, wherein the data discarding section discards the packet data when the data retention time determined by multiplying the amount of the data stored in the buffer section with a rate of reading from the buffer section the data stored in the buffer section is equal to or greater than a threshold value.

12. A packet communication system comprising:
a terminal apparatus that sequentially reads from a first buffer packet data temporarily stored in the first buffer, performs predetermined protocol processing and transmits the packet data;
a base station apparatus that temporarily stores the packet data transmitted from the terminal apparatus in a second buffer, sequentially reads from the second buffer the packet data stored in the second buffer, performs predetermined protocol processing and outputs the packet data; and
a control station apparatus that temporarily stores the packet data transmitted from the base station apparatus in a third buffer, sequentially reads from the third buffer the packet data stored in the third buffer and performs predetermined protocol processing,
wherein the control station apparatus requests the base station apparatus to lower a transmission rate of packet data transmitted from the base station apparatus to the control station apparatus based on the amount of the packet data stored in the third buffer.

13. The packet communication system according to claim 12, wherein the base station apparatus requests the terminal apparatus to lower the transmission rate of the packet data transmitted from the terminal apparatus to the base station apparatus based on the amount of the packet data stored in the second buffer.

14. The packet communication system according to claim 12, wherein the terminal apparatus discards packet data based on the amount of the packet data stored in the first buffer so that new packet data is not stored in the first buffer, and, when the packet data is discarded, sets the transmission rate of the packet data lower than when the packet data is not discarded.

15. A packet communication method comprising the steps of:
at a terminal apparatus, sequentially reading from a first buffer packet data temporarily stored in the first buffer, performing predetermined protocol processing and transmitting the packet data to a base station apparatus;
at the base station apparatus, receiving the packet data transmitted from the terminal apparatus, temporarily storing the packet data in a second buffer, sequentially reading from the second buffer the packet data stored in the second buffer, performing predetermined protocol processing and transmitting the packet data to a control station apparatus; and
at the control station apparatus, temporarily storing the packet data transmitted from the base station apparatus in a third buffer, sequentially reading from the third buffer the packet data store in the third buffer and performing predetermined protocol processing,
wherein the control station apparatus requests the base station apparatus to lower a transmission rate of packet data transmitted from the base station apparatus to the control station apparatus based on the amount of the packet data stored in the third buffer.

16. The packet communication method according to claim 15, wherein the base station apparatus requests the terminal apparatus to control a transmission rate of packet data transmitted from the terminal apparatus to the base station apparatus based on the amount of the packet data stored in the second buffer.

17. The packet communication method according to claim 15, wherein the terminal apparatus discards packet data based on the amount of the packet data stored in the first buffer so that new packet data is not stored in the first buffer, and, when the packet data is discarded, sets the transmission rate of the packet data lower than when the packet data is not discarded.
